# FASCICULE DE BREVET EUROPEEN

(11) **EP 2 760 727 B1**
(45) Date de publication et mention de la délivrance du brevet: **07.11.2018**
(21) Numéro de dépôt: 12775791.2
(22) Date de dépôt: 28.09.2012
(51) Int. Cl.: B62D 43/04, B60G 13/00, B62D 43/10

(54) **BAC DE ROUE DE SECOURS ET METHODE D'INSTALLATION DUDIT BAC EN RELATION AVEC L'ANCRAGE DES AMORTISSEURS**
ERSATZRADMULDE UND MONTAGEVERFAHREN IN VERBINDUNG MIT DER DÄMPERBEFESTIGUNG
SPARE WHEEL PAN AND METHOD OF ASSEMBLY IN RELATION WITH THE DAMPER ANCHORING

(30) Priorité: 30.09.2011 FR 1158833
(43) Date de publication de la demande: 06.08.2014
(73) Titulaire: Renault S.A.S., 92100 Boulogne-Billancourt (FR)
(72) Inventeur: Foubert Vincent, 78200 Boissy Mauvoisin (FR); Bannier Nathalie, 78860 Saint La Breteche (FR)
(86) Numéro de dépôt international: PCT/FR2012/052206
(87) Numéro de publication internationale: WO 2013/045860

(56) Documents cités:
- FR-A1- 2 894 921
- FR-A1- 2 929 223
- JP-A- 2005 170 270
- JP-A- 2006 044 366
- JP-A- 2008 149 822
- US-A1- 2002 185 881

## Description

La présente invention se rapporte à un bac de roue de secours et à une méthode d'installation dudit bac dans la partie arrière d'un véhicule automobile. Voir comme l'art antérieur le plus proche FR2894921.

Les bacs de roue de secours sont usuellement installés dans la partie de caisse arrière des véhicules automobiles, au niveau du porte-à-faux. Ladite partie de caisse arrière comprend des éléments de structure et notamment une partie des longerons et des traverses, sur lesquels est appuyée une paroi de plancher. En outre, le véhicule automobile comprend des amortisseurs arrière reliés aux éléments de structure dans des zones d'ancrage. Le bac de roue de secours est installé en-dessous du niveau du plancher, à travers un espace libre sous les éléments de structure. Aussi, la roue de secours est-elle apte à être insérée à travers le plancher et entre les éléments de structure directement dans le bac de roue de secours.

Le bac de roue de secours est généralement réalisé en matière plastique et il est installé après le montage des amortisseurs. Ainsi, au cours du montage du véhicule automobile, grâce audit espace libre, on monte aisément les amortisseurs dans les zones d'ancrage et on vient ensuite installer le bac de roue de secours.

Or, il s'est avéré que la mise en oeuvre d'un bac de roue de secours en acier était avantageuse économiquement. Toutefois, l'installation du bac doit être effectuée avant le montage, pour pouvoir être plongé dans les bains de cataphorèse. Aussi, ledit espace libre, au niveau des éléments de structure, est réservé pour le bac de roue de secours et il n'est alors plus possible de monter aisément les amortisseurs dans la zone d'ancrage durant le montage.

En outre, pour des raisons économiques, il est impossible de modifier fondamentalement l'architecture très compacte de la voie et du porte-à-faux des véhicules automobiles actuels.

Aussi, un problème qui se pose et que vise à résoudre la présente invention est de fournir un bac de roue de secours qui puisse être installé avant le montage des amortisseurs sans pour autant rendre malaisée l'opération d'installation.

Dans ce but, la présente invention propose, selon un premier objet, un bac de roue de secours destiné à être installé dans la partie de caisse arrière d'un véhicule automobile, ledit bac de roue de secours présentant un fond et deux bords latéraux opposés, ladite partie de caisse arrière comprenant des éléments de structure et une paroi de plancher apte à venir en appui sur lesdits éléments de structure, tandis que ledit bac de roue de secours est apte à être installé en-dessous dudit plancher pour être relié auxdits éléments de structure, ledit véhicule automobile comprenant en outre des amortisseurs, tandis que lesdits éléments de structure comprennent des zones d'ancrage pour pouvoir ancrer lesdits amortisseurs. Selon l'invention, au moins un desdits bords latéraux dudit bac de roue de secours présente un orifice latéral ; et ledit bac de roue de secours est apte à être installé entre lesdits éléments de structure de façon que ledit orifice latéral soit ajusté en regard de l'une desdites zones d'ancrage pour pouvoir ancrer l'un desdits amortisseurs depuis l'intérieur dudit bac de roue à travers ledit orifice latéral.

Ainsi, une caractéristique de l'invention réside dans la mise en oeuvre d'un bac de roue de secours présentant un orifice latéral apte à venir en regard de la zone d'ancrage lorsqu'il est installé. De la sorte, l'amortisseur qui est ancré sur l'élément de structure grâce à une chape, par exemple, est alors maintenu dans la chape, tandis qu'un élément vissable est introduit depuis l'intérieur du bac de roue de secours à travers l'orifice latéral pour être engagé ensuite en travers la chape et l'amortisseur. Par conséquent, grâce à l'orifice latéral, il est aisé de monter l'amortisseur au cours des opérations de montage malgré la présence du bac de roue de secours ; lequel bac de roue de secours est fabriqué dans un matériau, par exemple en acier.

De plus, ledit au moins un desdits bords latéraux présente préférentiellement une paroi en retrait apte à venir s'étendre à distance de ladite une desdites zones d'ancrage pour former un espace libre entre ladite paroi en retrait et ladite une desdites zones d'ancrage. De la sorte, après que l'élément vissable a été introduit en travers de la chape, il est également aisé d'engager un outil de vissage dans ledit espace libre, pour venir parfaire le vissage de l'élément vissable en travers de la chape.

Par ailleurs, lesdits deux bords latéraux opposés sont terminés par une bordure de fixation en retour et on expliquera plus en détail dans la suite de la description que le bac de roue de secours peut être installé par le dessus de la partie arrière de caisse, tandis que la bordure de fixation en retour vient en appui sur les éléments de structure.

Aussi, et selon une caractéristique particulièrement avantageuse, ledit orifice latéral s'étend longitudinalement selon une direction sensiblement perpendiculaire audit fond. De la sorte, l'outil de vissage peut être non seulement inséré dans ledit espace libre mais aussi à travers l'orifice latéral ainsi formé, ce qui permet d'obtenir un plus grand espace de liberté encore pour l'outil de vissage.

Préférentiellement, le bac de roue de secours comprend un organe d'obturation démontable destiné à être monté à travers l'orifice latéral de manière à pouvoir l'obturer après que l'amortisseur a été monté. Cet organe d'obturation permet essentiellement de boucher l'orifice latéral et de conserver l'étanchéité du bac de roue de secours au niveau de l'orifice.

Par ailleurs, le bord latéral dans lequel est ménagé l'orifice latéral comporte une pièce de renfort montée autour de l'orifice latéral pour renforcer le bord. En effet, l'orifice latéral tend à diminuer localement la résistance mécanique du bac de roue de secours, aussi la pièce de renfort permet d'augmenter localement cette résistance mécanique et permet d'assurer une tenue vibratoire aux sollicitations.

Selon un autre objet, la présente invention propose une méthode d'installation d'un bac de roue de secours dans la partie de caisse arrière d'un véhicule automobile, ledit véhicule automobile comprenant en outre des amortisseurs, ladite méthode étant du type selon laquelle, d'une part on fournit un bac de roue de secours présentant un fond et deux bords latéraux opposés, tandis que ladite partie de caisse arrière comprend des éléments de structure et une paroi de plancher apte à venir en appui sur lesdits éléments de structure, et on installe d'autre part ledit bac de roue de secours en-dessous dudit plancher pour le relier auxdits éléments de structure, tandis que lesdits éléments de structure comprennent des zones d'ancrage pour pouvoir ancrer lesdits amortisseurs. Selon l'invention, on fournit un bac de roue de secours présentant un orifice latéral dans au moins un desdits bords latéraux, et on installe ledit bac de roue de secours entre lesdits éléments de structure de façon que ledit orifice latéral soit ajusté en regard de l'une desdites zones d'ancrage, de manière à pouvoir ancrer l'un desdits amortisseurs depuis l'intérieur dudit bac de roue de secours à travers ledit orifice latéral.

Ainsi, grâce à cette méthode d'installation du bac de roue de secours, il peut être réalisé en acier sans pour autant grever la vitesse de montage des amortisseurs. Au surplus, on fournit avantageusement un bac de roue de secours dont ledit au moins un desdits bords latéraux présente une paroi en retrait apte à venir s'étendre à distance de ladite une desdites zones d'ancrage pour former un espace libre entre ladite paroi en retrait et ladite une desdites zones d'ancrage, et on fournit un outil d'ancrage, par exemple un outil de vissage, apte à être inséré à l'intérieur dudit espace libre pour ancrer ledit un desdits amortisseurs.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique de dessus du bac de roue de secours conforme à l'invention ; et,
- la Figure 2 est une vue schématique en coupe brisée selon le plan II-II du bac de roue de secours illustré sur la Figure 1.

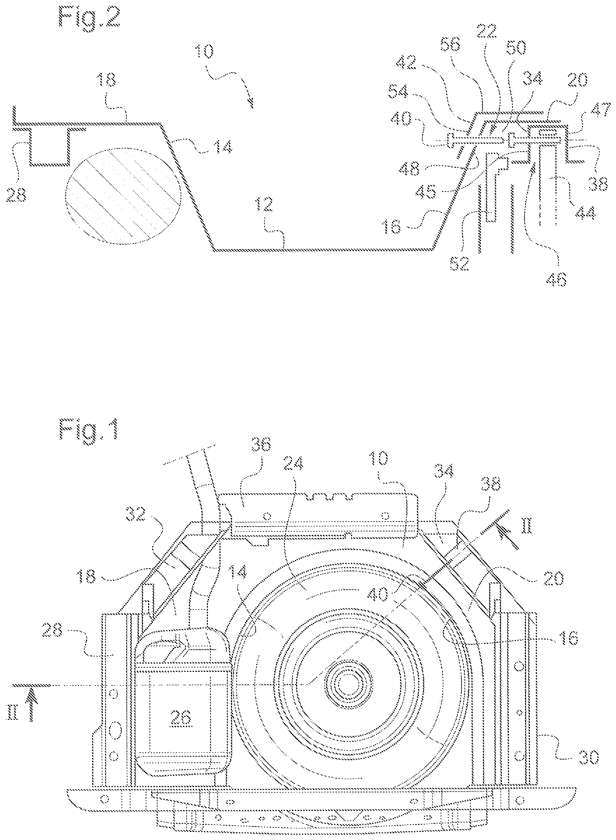

On se référera tout d'abord à la Figure 2 illustrant un bac de roue de secours 10 en acier, installé au niveau du porte-à-faux dans la partie arrière d'un véhicule automobile. Le bac de roue de secours 10 présente un fond 12 et deux bords latéraux opposés et évasés, 14, 16, prolongés respectivement par deux bordures de fixation en retour 18, 20 qui s'étendent sensiblement parallèlement au fond 12. Par ailleurs, le bac de roue de secours 10 présente un orifice latéral 22 ménagé dans l'un des deux bords latéraux 16 près de l'une des bordures de fixation en retour 20, et dont le diamètre est par exemple compris entre 20 et 25 mm ou bien encore entre 21 et 24 mm.

En vue de dessus, sur la Figure 1, on retrouve le bac de roue de secours 10 à l'intérieur duquel est installée une roue de secours 24. On y retrouve également l'une des bordures de fixation en retour 20 prolongeant le bord latéral correspondant 16 et l'autre des bordures de fixation en retour 18 à travers laquelle en transparence apparaît un élément de détente des gaz d'échappement 26, et qui prolonge le bord latéral correspondant 14.

Apparaissent également sur cette Figure 1 deux premiers éléments de structure parallèles, 28, 30, formés de profilés. L'un 28 est situé à l'opposé de l'élément de détente des gaz d'échappement 26 par rapport à la roue de secours 24, l'autre 30 est situé à l'opposé par rapport à la roue de secours 24. Ils sont respectivement prolongés par deux éléments de structure obliques 32, 34 convergeant l'un vers l'autre. Les deux éléments de structure obliques 32, 34 sont réunis ensemble par un élément de structure transversal 36 sensiblement perpendiculaire aux deux éléments de structure parallèles 28, 30.

L'un des éléments de structure oblique 34 comportent une chape 38 en regard du bord latéral 16 du bac de roue de secours 10, et tel que représenté en transparence sur la Figure 1, un élément vissable 40 pré-engagé à travers le bord latéral 16 et la chape 38.

On se référera de nouveau à la Figure 2, où la roue de secours 24 est retirée du bac de roue de secours 10 et où l'on retrouve l'élément vissable 40 pré-engagé à travers l'orifice latéral 22. Par ailleurs, une pièce de renfort 42, que l'on décrira dans la suite de la description, est représentée sur la Figure 2.

On retrouve également sur cette Figure 2, la chape 38 à l'intérieur de laquelle est engagée l'extrémité d'un amortisseur arrière 44 du véhicule automobile. L'intérieur de chape 38 forme entre deux parois de chape opposées 45, 47, une zone d'ancrage 46 de l'amortisseur arrière 44. Ainsi, le bac de roue de secours 10 est préalablement installé dans la partie arrière du véhicule, les bordures de fixation en retour 18, 20 en appui sur les éléments de structure. Le montage de l'amortisseur arrière 44 est ainsi effectué en maintenant son extrémité à l'intérieur de la zone d'ancrage 46 et en engageant l'élément vissable 40, depuis l'intérieur du bac de roue de secours 10 à travers l'orifice latéral 22 puis à travers la chape 38 et l'extrémité de l'amortisseur arrière 44.

Par ailleurs, on observera que la paroi 48 du bord latéral 16, à travers laquelle est ménagé l'orifice latéral 22, s'étend en retrait par rapport à la chape 38 et à l'élément de structure oblique 34 qui la supporte en ménageant un espace libre 50 entre la paroi 48 et l'élément de structure oblique 34 précisément.

Une première paroi 45 de la chape 38 présente un perçage à travers lequel l'élément vissable 40 est engagé librement tandis qu'une seconde paroi 47 de la chape 38 présente un taraudage pour recevoir la tige filetée de l'élément vissable 40. Aussi, l'élément vissable, depuis l'intérieur du bac de roue de secours 10, est engagé librement dans le premier perçage de la première paroi 45 de la chape 38 pour ensuite être engagé à travers l'extrémité de l'amortisseur 44 puis vissé dans le taraudage de la seconde paroi 47 de la chape 38. De la sorte, l'extrémité de l'amortisseur est emprisonnée à l'intérieur de la chape 38.

L'espace libre 50 permet également d'opérer manuellement pour assister l'engagement de l'élément vissable 40 en travers de la chape 38, mais il permet également de pouvoir engager une visseuse 52, à motorisation électrique par exemple, de manière à visser l'élément vissable 40 automatiquement d'une part, et avec un couple prédéterminé d'autre part pour un meilleur blocage et une bonne tenue de l'élément vissable 40 dans le temps.

Ainsi, bien que le bac de roue de secours 10 soit installé avant le montage de l'amortisseur 44, ce dernier peut néanmoins être monté aisément et librement en engageant l'élément vissable 40 à travers l'orifice latéral du bord latéral 16 du bac de roue 10 puis en poursuivant le vissage de l'élément vissable 40 au moyen de la visseuse 52 à l'intérieur de l'espace libre 50.

On observera que l'orifice latéral 22 peut être élargi verticalement pour former un orifice oblong, de manière à pouvoir engager une partie de la visseuse 52 à l'intérieur du bac de roue de secours 10 à travers le bord latéral 16. Cette caractéristique permet d'agrandir l'espace libre 50 pour utiliser des visseuses de plus grande dimension, et aussi pour faciliter leur manipulation dans cet espace confiné.

Par ailleurs, la pièce de renfort 42 est rapportée avantageusement sur le bac de roue de secours 10 au niveau de l'orifice latéral 22. Elle présente une première aile 54 apte à venir s'appliquer à plat à l'intérieur de la paroi 48 du bord latéral 16 et autour de l'orifice latéral 22 et une seconde aile 56 destinée à venir s'appliquer à plat sur la bordure de fixation en retour 20. La pièce de renfort 42 est par exemple réalisée en acier et elle peut être alors soudée ou bien encore rivetée. Elle a pour fonction principale d'assurer une bonne tenue vibratoire due aux sollicitations.

De plus, l'orifice latéral 22, qui est alors libre après que l'élément vissable 40 a été installé à travers la chape 38, est obturé au moyen d'un organe d'obturation démontable, par exemple un bouchon en élastomère, de manière à préserver le bac de roue de secours 10 vis-à-vis des entrées d'eau extérieures. Étant démontable, le bouchon en élastomère permet d'accéder ultérieurement à l'élément vissable 40 pour démonter l'amortisseur 44.

## Revendications

1. Bac de roue de secours (10) destiné à être installé dans la partie de caisse arrière d'un véhicule automobile, ledit bac de roue de secours (10) présentant un fond (12) et deux bords latéraux opposés (14, 16), ladite partie de caisse arrière comprenant des éléments de structure (28, 30, 32, 34, 36) et une paroi de plancher apte à venir en appui sur lesdits éléments de structure, tandis que ledit bac de roue de secours (10) est apte à être installé en-dessous dudit plancher pour être relié auxdits éléments de structure (28, 30, 32, 34, 36), ledit véhicule automobile comprenant en outre des amortisseurs (44), tandis que lesdits éléments de structure (28, 30, 32, 34, 36) comprennent des zones d'ancrage (46) pour pouvoir ancrer lesdits amortisseurs (44),
**caractérisé en ce qu'**au moins un desdits bords latéraux (16) dudit bac de roue de secours (10) présente un orifice latéral (22),
**et en ce que** ledit bac de roue de secours (10) est apte à être installé entre lesdits éléments de structure (28, 30, 32, 34, 36) de façon que ledit orifice latéral (22) soit ajusté en regard de l'une desdites zones d'ancrage (46) pour pouvoir ancrer l'un desdits amortisseurs (44) depuis l'intérieur dudit bac de roue (10) à travers ledit orifice latéral (22).

2. Bac de roue de secours selon la revendication 1, **caractérisé en ce que** ledit au moins un desdits bords latéraux (16) présente une paroi en retrait (48) apte à venir s'étendre à distance de ladite une desdites zones d'ancrage (46) pour former un espace libre (50) entre ladite paroi en retrait (48) et ladite une desdites zones d'ancrage (46).

3. Bac de roue de secours selon la revendication 1 ou 2, **caractérisé en ce qu'**il est fabriqué dans un matériau métallique.

4. Bac de roue de secours selon l'une quelconque des revendications 1 à 3, **caractérisé en ce que** lesdits deux bords latéraux opposés (14, 16) sont terminés par une bordure de fixation en retour (18, 20).

5. Bac de roue de secours selon la revendication 4, **caractérisé en ce que** ladite bordure de fixation en retour (18, 20) est apte à venir prendre appui sur lesdits éléments de structure (28, 30, 32, 34, 36).

6. Bac de roue de secours selon l'une quelconque des revendications 1 à 5, **caractérisé en ce que** ledit orifice latéral (22) s'étend longitudinalement selon une direction sensiblement perpendiculaire audit fond (12).

7. Bac de roue de secours selon l'une quelconque des revendications 1 à 6, **caractérisé en ce qu'**il comprend un organe d'obturation démontable destiné à être monté à travers ledit orifice latéral (22) pour obturer ledit orifice latéral.

8. Bac de roue de secours selon l'une quelconque des revendications 1 à 7, **caractérisé en ce que** ledit au moins un desdits bords latéraux (16) comprend une pièce de renfort (42) montée autour dudit orifice latéral (22) pour renforcer mécaniquement ledit au moins un desdits bords latéraux (16).

9. Méthode d'installation d'un bac de roue de secours (10) dans la partie de caisse arrière d'un véhicule automobile, ledit véhicule automobile comprenant en outre des amortisseurs (44), ladite méthode étant du type selon laquelle, d'une part on fournit un bac de roue de secours (10) présentant un fond (12) et deux bords latéraux opposés (14, 16), tandis que ladite partie de caisse arrière comprend des éléments de structure (28, 30, 32, 34, 36) et une paroi de plancher apte à venir en appui sur lesdits éléments de structure, et on installe d'autre part ledit bac de roue de secours (10) en-dessous dudit plancher pour le relier auxdits éléments de structure, tandis que lesdits éléments de structure (28, 30, 32, 34, 36) comprennent des zones d'ancrage (46) pour pouvoir ancrer lesdits amortisseurs (44),
**caractérisée en ce qu'**on fournit un bac de roue de secours (10) présentant un orifice latéral (22) dans au moins un desdits bords latéraux (16) dudit bac de roue de secours fourni, et on installe ledit bac de roue de secours (10) entre lesdits éléments de structure (28, 30, 32, 34, 36) de façon que ledit orifice latéral (22) soit ajusté en regard de l'une desdites zones d'ancrage (46), de manière à pouvoir ancrer l'un desdits amortisseurs (44) depuis l'intérieur dudit bac de roue de secours (10) à travers ledit orifice latéral (22).

10. Méthode d'installation selon la revendication 9, **caractérisée en ce qu'**on fournit un bac de roue de secours (10) dont ledit au moins un desdits bords latéraux (16) présente une paroi en retrait (48) apte à venir s'étendre à distance de ladite une desdites zones d'ancrage (46) pour former un espace libre (50) entre ladite paroi en retrait (48) et ladite une desdites zones d'ancrage (46), **et en ce qu'**on fournit un outil d'ancrage (52) apte à être inséré à l'intérieur dudit espace libre (50) pour ancrer ledit un desdits amortisseurs (44).

## Patentansprüche

1. Reserveradmulde (10), die dazu bestimmt ist, im hinteren Karosseriebereich eines Kraftfahrzeugs eingebaut zu werden, wobei die Reserveradmulde (10) einen Boden (12) und zwei gegenüberliegende Seitenränder (14, 16) aufweist, wobei der hintere Karosseriebereich Strukturelemente (28, 30, 32, 34, 36) und eine Bodenwand enthält, die auf den Strukturelementen in Auflage kommen kann, während die Reserveradmulde (10) unter dem Boden eingebaut werden kann, um mit den Strukturelementen (28, 30, 32, 34, 36) verbunden zu werden, wobei das Kraftfahrzeug außerdem Stoßdämpfer (44) enthält, während die Strukturelemente (28, 30, 32, 34, 36) Verankerungszonen (46) enthalten, um die Stoßdämpfer (44) verankern zu können,
**dadurch gekennzeichnet, dass** mindestens einer der Seitenränder (16) der Reserveradmulde (10) eine seitliche Öffnung (22) aufweist,
und dass die Reserveradmulde (10) zwischen den Strukturelemente (28, 30, 32, 34, 36) so eingebaut werden kann, dass die seitliche Öffnung (22) gegenüber einer der Verankerungszonen (46) eingepasst wird, um einen der Stoßdämpfer (44) von innerhalb der Radmulde (10) durch die seitliche Öffnung (22) hindurch verankern zu können.

2. Reserveradmulde nach Anspruch 1, **dadurch gekennzeichnet, dass** der mindestens eine der Seitenränder (16) eine zurückgesetzte Wand (48) aufweist, die sich in Abstand zur einen der Verankerungszonen (46) erstrecken kann, um einen Freiraum (50) zwischen der zurückgesetzten Wand (48) und der einen der Verankerungszonen (46) zu bilden.

3. Reserveradmulde nach Anspruch 1 oder 2, **dadurch gekennzeichnet, dass** sie aus einen metallischen Material hergestellt wird.

4. Reserveradmulde nach einem der Ansprüche 1 bis 3, **dadurch gekennzeichnet, dass** die zwei gegenüberliegenden Seitenränder (14, 16) in einer rückläufigen Befestigungsrandleiste (18, 20) enden.

5. Reserveradmulde nach Anspruch 4, **dadurch gekennzeichnet, dass** die rückläufige Befestigungsrandleiste (18, 20) auf den Strukturelementen (28, 30, 32, 34, 36) aufliegen kann.

6. Reserveradmulde nach einem der Ansprüche 1 bis 5, **dadurch gekennzeichnet, dass** die seitliche Öffnung (22) sich längs in einer Richtung im Wesentlichen lotrecht zum Boden (12) erstreckt.

7. Reserveradmulde nach einem der Ansprüche 1 bis 6, **dadurch gekennzeichnet, dass** sie ein entfernbares Verschlussorgan enthält, das dazu bestimmt ist, durch die seitliche Öffnung (22) hindurch montiert zu werden, um die seitliche Öffnung zu verschließen.

8. Reserveradmulde nach einem der Ansprüche 1 bis 7, **dadurch gekennzeichnet, dass** der mindestens eine der Seitenränder (16) ein Verstärkungsbauteil (42) enthält, das um die seitliche Öffnung (22) herum montiert wird, um den mindestens einen der Seitenränder (16) mechanisch zu verstärken.

9. Verfahren zum Einbau einer Reserveradmulde (10) in den hintere Karosseriebereich eines Kraftfahrzeugs, wobei das Kraftfahrzeug außerdem Stoßdämpfer (44) enthält, wobei das Verfahren von der Art ist, gemäß der einerseits eine Reserveradmulde (10) bereitgestellt wird, die einen Boden (12) und zwei gegenüberliegende Seitenränder (14, 16) enthält, während der hintere Karosseriebereich Strukturelemente (28, 30, 32, 34, 36) und eine Bodenwand enthält, die sich auf die Strukturelemente auflegen kann, und andererseits die Reserveradmulde (10) unter dem Boden eingebaut wird, um sie mit den Strukturelementen zu verbinden, während die Strukturelemente (28, 30, 32, 34, 36) Verankerungszonen (46) enthalten, um die Stoßdämpfer (44) verankern zu können,
**dadurch gekennzeichnet, dass** eine Reserveradmulde (10) bereitgestellt wird, die eine seitliche Öffnung (22) in mindestens einem der Seitenränder (16) der bereitgestellten Reserveradmulde enthält, und die Reserveradmulde (10) zwischen den Strukturelementen (28, 30, 32, 34, 36) so eingebaut wird, dass die seitliche Öffnung (22) gegenüber der einen der Verankerungszonen (46) so eingepasst wird, dass einer der Stoßdämpfer (44) von der Innenseite der Reserveradmulde (10) durch die seitliche Öffnung (22) hindurch verankert werden kann.

10. Einbauverfahren nach Anspruch 9, **dadurch gekennzeichnet, dass** eine Reserveradmulde (10) bereitgestellt wird, bei der der mindestens eine der Seitenränder (16) eine zurückgesetzte Wand (48) aufweist, die sich in Abstand zu der einen der Verankerungszonen (46) erstrecken kann, um einen Freiraum (50) zwischen der zurückgesetzten Wand (48) und der einen der Verankerungszonen (46) zu formen, und dass ein Verankerungswerkzeug (52) bereitgestellt wird, das ins Innere des Freiraums (50) eingeführt werden kann, um den einen der Stoßdämpfer (44) zu verankern.

## Claims

1. Spare wheel pan (10) designed to be installed in the rear body portion of a motor vehicle, said spare wheel pan (10) having a bottom (12) and two opposite lateral edges (14, 16), said rear body portion comprising structural elements (28, 30, 32, 34, 36) and a floor wall that is able to bear against said structural elements, while said spare wheel pan (10) is able to be installed below said floor so as to be connected to said structural elements (28, 30, 32, 34, 36), said motor vehicle further comprising shock absorbers (44), while said structural elements (28, 30, 32, 34, 36) comprise anchoring regions (46) so as to be able to anchor said shock absorbers (44),
**characterized in that** at least one of said lateral edges (16) of said spare wheel pan (10) has a lateral orifice (22),
**and in that** said spare wheel pan (10) is able to be installed between said structural elements (28, 30, 32, 34, 36) such that said lateral orifice (22) is aligned facing one of said anchoring zones (46) so as to be able to anchor one of said shock absorbers (44) from the interior of said wheel pan (10) through said lateral orifice (22).

2. Spare wheel pan according to Claim 1, **characterized in that** said at least one of said lateral edges (16) has a set-back wall (48) that is able to extend at a distance from said one of said anchoring zones (46) so as to form a free space (50) between said set-back wall (48) and said one of said anchoring zones (46).

3. Spare wheel pan according to Claim 1 or 2,
**characterized in that** it is made of a metallic material.

4. Spare wheel pan according to one of Claims 1 to 3,
**characterized in that** said two opposite lateral edges (14, 16) terminate in a turned-back attachment rim (18, 20).

5. Spare wheel pan according to Claim 4, **characterized in that** said turned-back attachment rim (18, 20) is able to bear against said structural elements (28, 30, 32, 34, 36).

6. Spare wheel pan according to one of Claims 1 to 5,
**characterized in that** said lateral orifice (22) extends longitudinally in a direction essentially perpendicular to said bottom (12).

7. Spare wheel pan according to one of Claims 1 to 6,
**characterized in that** it comprises a removable closure member designed to be mounted across said lateral orifice (22) so as to block said lateral orifice.

8. Spare wheel pan according to one of Claims 1 to 7,
**characterized in that** said at least one of said lateral edges (16) comprises a reinforcing part (42) mounted around said lateral orifice (22) so as to mechanically reinforce said at least one of said lateral edges (16).

9. Method for installing a spare wheel pan (10) in the rear body portion of a motor vehicle, said motor vehicle further comprising shock absorbers (44), said method being of the type involving, on the one hand, providing a spare wheel pan (10) having a bottom (12) and two opposite lateral edges (14, 16), while said rear body portion comprises structural elements (28, 30, 32, 34, 36) and a floor wall that is able to bear on said structural elements, and on the other hand installing said spare wheel pan (10) beneath said floor so as to connected to said structural elements, while said structural elements (28, 30, 32, 34, 36) comprise anchoring regions (46) so as to be able to anchor said shock absorbers (44),
**characterized by** providing a spare wheel pan (10) having a lateral orifice (22) in at least one of said lateral edges (16) of said provided spare wheel pan, and installing said spare wheel pan (10) between said structural elements (28, 30, 32, 34, 36) such that said lateral orifice (22) is aligned facing one of said anchoring zones (46) so as to be able to anchor one of said shock absorbers (44) from the interior of said wheel pan (10) through said lateral orifice (22) .

10. Installation method according to Claim 9,
**characterized by** providing a spare wheel pan (10) of which said at least one of said lateral edges (16) has a set-back wall (48) that is able to extend at a distance from said one of said anchoring zones (46) so as to form a free space (50) between said set-back wall (48) and said one of said anchoring zones (46), **and by** providing an anchoring tool (52) that is able to be inserted into said free space (50) in order to anchor said one of said shock absorbers (44).
